# EUROPEAN PATENT SPECIFICATION

(11) **EP 4 643 038 B1**
(45) Date of publication and mention of the grant of the patent: **28.10.2026**
(21) Application number: 23833034.4
(22) Date of filing: 13.12.2023
(51) Int. Cl.: F16K 11/044, F16K 15/06, F24D 19/00, F24H 1/18, F28F 19/00, F28G 9/00, F28F 27/02

(54) **HEAT EXCHANGER WITH INTEGRATED DUAL ACTION FLOW REVERSAL VALVE**
WÄRMETAUSCHER MIT INTEGRIERTEM DOPPELWIRKUNGS-FLUSSUMKEHRVENTIL
ÉCHANGEUR DE CHALEUR DOTÉ D'UNE SOUPAPE D'INVERSION D'ÉCOULEMENT À DOUBLE ACTION INTÉGRÉE

(30) Priority: 27.12.2022 US 202263435347 P
(43) Date of publication of application: 05.11.2025
(73) Proprietor: Neoperl GmbH, 79379 Müllheim (DE)
(72) Inventor: HARRISON, Stephen James, Kingston, Ontario K7L 2N1 (CA)
(74) Representative: Mertzlufft-Paufler, Cornelius
(86) International application number: PCT/EP2023/085690
(87) International publication number: WO 2024/141273

(56) References cited:
- CN-U- 207 034 260
- CN-U- 215 831 202
- CN-U- 215 891 215
- CN-U- 217 153 105
- US-A1- 2017 075 364
- US-A1- 2020 263 880
- US-B2- 7 823 628

## Description

### TECHNICAL FIELD

The present invention relates to heat exchangers. More particularly, the invention relates to heat exchangers with improved fouling prevention.

### BACKGROUND

Plate heat exchangers are widely used in industry to efficiently transfer heat from one fluid stream to another without mixing of the two fluid streams. Various designs of plate heat exchangers are known, including so-called "clamped" plate or "brazed plate". Plate heat exchangers are available from many manufacturers in a variety of sizes and capacities, and may be designed for use with liquids, gases or vapors. They are usually used in the agricultural/food processing, bio-chemical and pharmaceutical industries, commercial and industrial process industries, Heating Ventilating and Air Conditioning (HVAC) applications, manufacturing and in institutional and residential devices such as domestic water heaters, heat pumps etc.

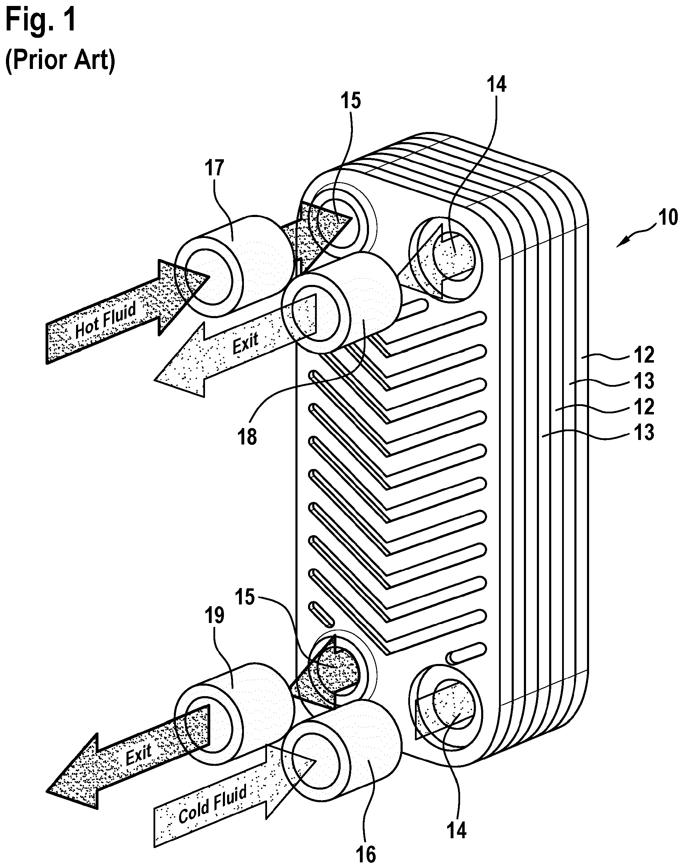

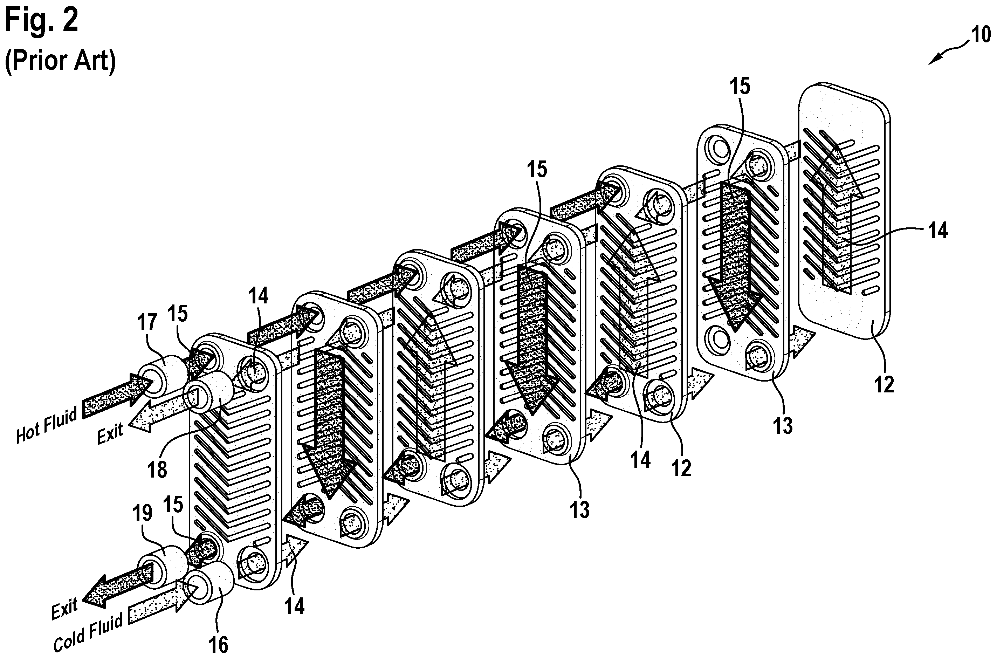

Virtually all plate heat exchangers 10 are formed of a series of metal plates 12, 13 assembled in such a fashion as to form as series of adjacent, preferably alternately connected, flow channels 14, 15, each allowing the circulation of a fluid. The flow channels 14, 15 and flow distribution passages are arranged such that adjacent flow channels 14, 15 circulate one of two fluids (see Fig. 1) allowing heat to be transferred from one stream to the other through the dividing metal plates 12, 13 without inter-mixing of the two separate fluid streams. The two fluid streams can be considered as a "primary" and "secondary" fluid circulation paths. To improve the "effectiveness" of a plate heat exchanger, it is standard practice to pattern the metal separation plates 12, 13, shown in Fig. 2, to increase heat-transfer surface area and local flow velocity, and to ensure uniform flow distribution. To further increase capacity and effectiveness, the size and number of plates 12, 13, and associated flow channels 14, 15, may be increased to accommodate greater loads or achieve certain performance characteristics such as dimensions or pressure drop (i.e., flow resistance). It is most common to exchange heat between two fluid streams originating from two distinct flow circulation systems. Although it is possible that both the primary and secondary fluids may be the same, it is not typical nor required. For example, the primary fluid may be a refrigerant vapor and the secondary a liquid (e.g., water), or vice versa.

Heat exchangers are usually fitted with at least two inlet ports 16, 17 and two exit ports 18, 19 to allow the entry and exit of the fluid streams, as shown for example in Figs. 1 and 2. These ports 16 - 19 are usually equipped with "plumbing" style fitting of various types (e.g., threaded or brazed pipe nipples etc.) to allow the connection of the flow circulation circuits to the heat exchanger.

As plate heat exchangers are usually designed to be compact and effective, spacing between adjacent plates is small, resulting in small flow passages. In certain circumstances, heat exchangers are subject to fouling and/or scaling in the flow passages due to the accumulation of particulate, chemical, biological or corrosion deposits. These deposits can have a very detrimental effect on performance due to the reduction of channel flow area, increased pressure drop, and increased thermal resistance between adjacent fluid streams. In the extreme, flow through one or both flow circuits may be significantly reduced, resulting in failure of the component and potentially, any associated equipment and processes.

In many cases, fouling may be accelerated in heat exchangers that circulate fluids that contain dissolved minerals or salts that deposit on the heat transfer surfaces. In such cases, manufacturers recommend that the heat exchanger be routinely cleaned or flushed with cleaning solutions to re-dissolve mineral deposits or suggest that the heat exchanger be "back-flushed "to wash out accumulated particulate or biological matter.

Fouling of heat exchangers that circulate water obtained from municipal, ground water, wells, lakes, and reservoirs are a particular problem if the water is considered to be "hard water", (i.e., contains dissolved minerals) that deposit over time on the heat-transfer surfaces in heat exchangers.

The inventor has previously developed back-flushing valve assemblies that can be used in connection with various thermal fluid handling components, including heat exchangers, such as shown in U.S. 7,823,628; U.S. 7,171,972; and U.S. 6,827,091. These have proved successful in passively backflushing the heat exchanger to clear and/or reduce fouling.

US 2020/263880 A1 describes a hydraulic system comprising a three-way valve, the three-way valve comprising a first port for the connection to a primary heat exchanger through the circulation pump, a second port and a third port for connection to the heating circuit and to a secondary heat exchanger, respectively. The three-way valve is switchable between two positions in which the first port is in fluid communication with the second port or with the third port. The three-way valve is responsive to the pressure applied by a circulation pump, and has a displaceable obstructing member that may be moved due to transitions between an off-state and an on-state of the circulation pump. The obstructing member comprises a pair of sealing surfaces facing away from each other and suitable to engage reciprocatingly respective opposed seats of the three-way valve.

CN 217 153 105 U describes a three-way check valve comprising a valve body, a valve core, an elastic piece and a seat body, wherein the valve body is provided with a first connector, a second connector and a third connector which are communicated with each other; the seat body is fixedly arranged in the valve body and is provided with a through hole; the valve core can movably penetrate through the through hole and can open the first connector and block the second connector under the action of water pressure; the elastic piece is propped between the valve core and the seat body to drive the valve core to block the first interface and open the second interface. The utility model discloses a case realizes preventing that two way water inlets from streaming, reduce cost, and the second interface is normally open state, can effectively reduce flow loss when it intakes.

CN 207 034 260 U describes a kind of check valve, including the valve body with hollow channel, the valve body includes the second valve body that one end is arranged to the first valve body of inlet and connected with the first valve body, core assembly is set in first valve body, including valve rod, spring and bottom, the bottom insertion is arranged on the other end of first valve body, sets through hole to form refluxing opening on the bottom. When cooperation is supported in one end of the valve rod with the inlet, the hollow channel of the inlet and first valve body is closed, and the refluxing opening connects with the hollow channel of first valve body ; When the other end of the valve rod supports cooperation with the bottom, the hollow channel of the refluxing opening and first valve body is closed, and the inlet connects with the hollow channel of first valve body.

However, improvements in both function and application are needed.

### SUMMARY

In one aspect, the present disclosure is directed to a heat exchanger, comprising a heat exchanger body having a series of adjacent first flow channels and second flow channels. The first flow channels are isolated from the second flow channels, with the first flow channels defining a primary fluid circulation path having an entry side and an exit side. First, second, and third ports are provided on the heat exchanger body and in fluid communication with the primary fluid circulation path. The first port is located on the entry side of the primary fluid circulation path and is adapted to be an intake for fluid to be heated during normal usage, and the second and third ports are located at the exit side of the primary fluid circulation path. The second port is adapted to be an exit for heated fluid from the primary fluid circulation path of the heat exchanger, and the third port is adapted to receive make-up fluid, which can be the same or a different fluid from the fluid in the primary circulation path. In one preferred arrangement, the first port is preferably located below the second port and the third port in a usage position, particularly for convection water heater applications. However, this is not required for all applications. A valve arrangement is located in at least one of the heat exchanger body or the second and third ports that is configured to passively switch (i.e., without an external actuator) between first and second operational modes. The valve arrangement includes a first valve body that is biased by a resilient element to a closed position against a first valve seat, which is located at or in proximity to the third port in the heat exchanger body, in order to close the third port in the first operational mode during normal usage. The valve arrangement further includes a second valve body that acts against a second valve seat, which is located at or in proximity to the second port in the heat exchanger body, and in the first operational mode, the second valve body is in an open position spaced apart from the second valve seat such that fluid being heated in the heat exchanger body is adapted to circulate through the primary fluid circulation path (i.e., the second side of the heat exchanger) in a positive flow direction from the first port to the second port. A functional connection is provided between the second valve body and the first valve body that extends through a portion of the heat exchanger body such that movement of the first valve body to the closed position moves the second valve body to the open position, and movement of the first valve body to an open position moves the second valve body to a closed position. In the second operational mode, upon a force of the make-up fluid acting on the first valve body from the third port overcoming a closing force of the resilient element and any pressure force of the fluid in the primary fluid circulation path, the first valve body is movable to the open position while simultaneously moving the second valve body to the closed position against the second valve seat such that the make-up fluid (such as mains water) is adapted to circulate through the first flow channels of the primary fluid circulation path in a negative flow direction from the third port to the first port. This backflushes the first flow channels of the primary fluid circulation path to remove fouling as well as re-dissolves certain mineral deposits with the reverse direction cold water flow from the mains.

Preferably, upon the resilient force and any pressure force in the primary fluid path overcoming the pressure of the make-up fluid at the third port, the valve arrangement is configured to return to the first operational mode thereby reestablishing a flow path for the primary fluid in the positive flow direction. This allows for totally passive operation of the valve arrangement for backflushing or flow reversal based on a demand for heated fluid being drawn from the primary fluid path causing a pressure drop that allows the valve arrangement to move to the second operational position.

In one preferred arrangement, the resilient element is a spring, preferably a metallic coil spring. However, this could also be a pneumatic or magnetic force based resilient element.

In one preferred arrangement, the functional connection is a mechanical link. However, it could also be a magnetic coupling, a hydraulic or pneumatic connection, or any other suitable arrangement.

In a preferred embodiment, the second and third ports are axially aligned, and the functional connection is an axially extending shaft. This allows for easier manufacturing with only minimal changes from existing heat exchanger assemblies in order to incorporate the valve arrangement for passive backflushing.

In one embodiment, the first valve seat is integrally formed in the third port.

In one embodiment, the second valve seat is integrally formed in the second port.

In one embodiment, one of the first or second valve seats is integrally formed in a respective one of the third or second ports, and the other of the first or second valve seats is formed as a separate part that is inserted into the respective other one of the third or second ports.

In one embodiment, the first and second valve seats are inserted respectively into the third and second ports.

In one embodiment, the first valve seat is located in a first valve housing that is inserted into the third port, and the resilient element is located in the first valve housing. However, the resilient element could be positioned anywhere as long as it is functionally able to bias the first valve body toward the first valve seat.

Preferably, a first seal is located between the first valve housing and an inner wall of the third port or the heat exchanger body. In one embodiment, the second valve seat is located in a second valve housing that is inserted into the second port.

Preferably, a second seal is located between an inner wall of the second port or the heat exchanger body.

In one embodiment, a resilient element support is located in the heat exchanger body, and the resilient element is arranged between the resilient element support and the first valve body.

In one preferred construction, the heat exchanger body includes a series of metal plates assembled to form the series of the adjacent first flow channels and the second flow channels.

In another aspect, a method of passively backflushing a heat exchanger is provided that includes the steps of:
providing a heat exchanger having a heat exchanger body with a series of adjacent first flow channels and second flow channels, the first flow channels being isolated from the second flow channels, the first flow channels defining a primary fluid circulation path having an entry side and an exit side; first, second, and third ports provided on the heat exchanger body and in fluid communication with the primary fluid circulation path, the first port being located on the entry side of the primary fluid circulation path, and the second and third ports being located at the exit side of the primary fluid circulation path, with the first port being located upstream of (and preferably below) the second port and the third port in a typical usage position; a valve arrangement located in at least one of the heat exchanger body or the second and third ports that is configured to passively switch between first and second operational modes, the valve arrangement including a first valve with a first valve body that is biased by a resilient element to a closed position against a first valve seat, which is located at or in proximity to the third port in the heat exchanger body, in order to close the third port in the first operational mode during normal usage, a second valve having a valve body that acts against a second valve seat, which is located at or in proximity to the second port in the heat exchanger body, and in the first operational mode, the second valve body is in an open position spaced apart from the second valve seat, and a functional connection between the second valve body and the first valve body that extends through a portion of the heat exchanger body such that movement of the first valve body to the closed position moves the second valve body to the open position, and movement of the first valve body to an open position moves the second valve body to a closed position;
connecting the third port to a pressurized fluid water supply, which can be mains water in a water heater application;
connecting the first port to a bottom connection of a hot fluid storage vessel;
connecting the second port to a top connection of the hot fluid storage tank;
in the first operational mode, holding the second valve body in the open position spaced apart from the second valve seat providing a positive flow direction for fluid from the first port to the second port through the primary fluid path of the heat exchanger body by convection and/or forced pump circulation as the fluid entering the first port is heated; and
in the second operational mode, upon a pressure of the make-up fluid, such as mains water in a water heater application, at the third port overcoming a closing force of the resilient element and any pressure force of the water in the primary fluid path, moving the first valve body to the open position while simultaneously moving the second valve body to the closed position against the second valve seat such that the first valve is opened and providing a flow of the make-up fluid from the make-up fluid supply in a negative flow direction through the primary fluid circulation path from the third port to the first port, backflushing the heat exchanger.

The method may optionally further include integrally forming at least one of the first or second valve seats in the respective third or second ports or a portion of the heat exchanger body.

The method may optionally further include providing the second and third ports axially aligned with one another.

The method may optionally further include forming the functional connection as a mechanical link.

Preferably, the method includes providing the heat exchanger assembly as a pre-assembled unit.

The features noted above can be used alone or in various combination to provide.

### BRIEF DESCRIPTION OF THE DRAWINGS

Further advantages and characteristics of the invention will become apparent by the below description of embodiments making reference to the accompanying drawings, in which:
Figure 1 is a perspective view of a known plate heat exchanger
Figure 2 is an exploded view of the plate heat exchanger of Figure 1.
Figure 3 is schematic view of a heat exchanger with integrated dual action backflush valve arrangement in accordance with one embodiment of the present invention, shown connected to a tank in a water heating arrangement in a first operating mode with flow of the primary fluid through the heat exchanger in a positive flow direction.
Figure 4 is a schematic view of the heat exchanger with integrated dual action backflush valve shown in Figure 3 shown in a second operating mode with the flow of the primary fluid through the heat exchanger in a negative flow direction.
Figure 5 is a cross-sectional view through a plate heat exchanger with integrated dual action backflush valve arrangement in accordance with one embodiment of the present invention, shown in a first operating mode with flow of the primary fluid through the heat exchanger in a positive flow direction.
Figure 6 is a cross-sectional view of the plate heat exchanger with integrated dual action backflush valve shown in Figure 5 shown in a second operating mode with the flow of the primary fluid through the heat exchanger in a negative flow direction.
Figure 7 is an exploded perspective view of the plate heat exchanger with integrated dual action backflush valve arrangement in Figure 5, shown in the first operating mode with flow of the primary fluid through the heat exchanger in a positive flow direction.
Figure 8 is an exploded perspective view of the plate heat exchanger with integrated dual action backflush valve shown in Figure 7 shown in a second operating mode with the flow of the primary fluid through the heat exchanger in a negative flow direction.
Figure 9 is a cross-sectional view of an embodiment of the dual action backflush valve that can be integrated into a plate heat exchanger.
Figure 10 is a cross-sectional view taken along line A-A in Figure 9.

### DETAILED DESCRIPTION

Certain terminology is used in the following description for convenience only and is not limiting. The words "right," "left," "top," and "bottom" designate directions in the drawings to which reference is made. The words "a" and "one," as used in the claims and in the corresponding portions of the specification, are defined as including one or more of the referenced item unless specifically stated otherwise. This terminology includes the words above specifically mentioned, derivatives thereof, and words of similar import. The phrase "at least one" followed by a list of two or more items, such as "A, B, or C," means any individual one of A, B or C as well as any combination thereof. The terms approximately or generally mean within +/- 10% of a specified value unless otherwise noted, and within +/- 25° of a specified angle or direction.

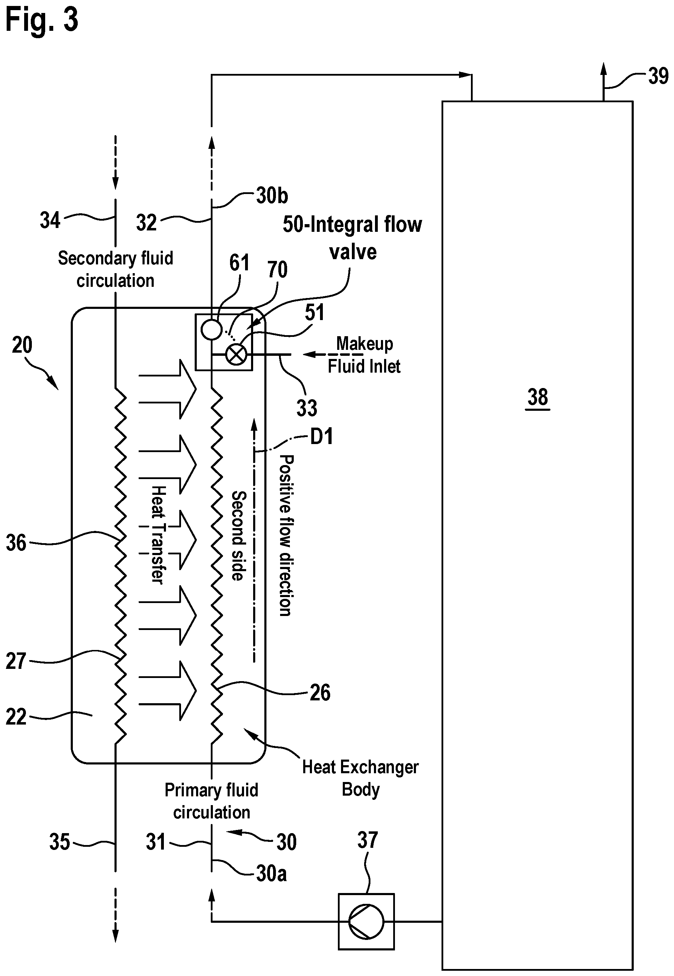

Referring to Figures 3 - 8, a heat exchanger 20, 20' that includes an integral flow valve arrangement 50, 50' that automatically delivers a similar, or different fluid, (i.e., a "makeup" fluid) to the primary fluid circulation path on a second side of the heat exchanger 20, 20' in a flow direction that is the in reverse direction to the normal or "positive" flow direction is shown.

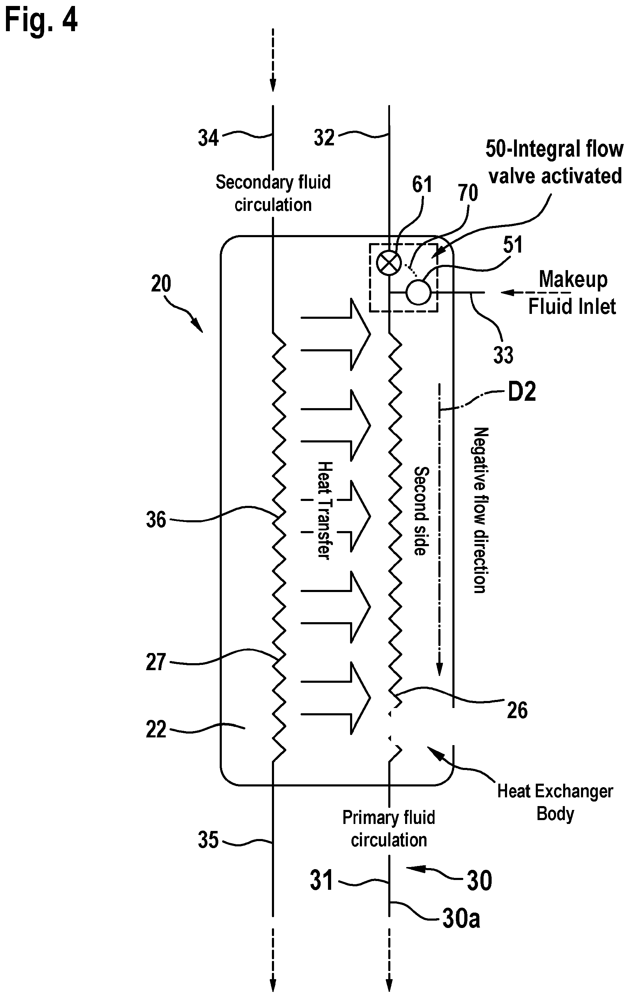

In Figures 3 and 4, the heat exchanger 20 is shown schematically, and in Fig. 3 it is shown as part of a water heating arrangement in which the primary fluid circulation path 30, shown with an optional circulation pump 37 in Figure 3, is connected with a hot water storage tank 38, and the secondary fluid circulation path 36 is connected to a heating source (not shown).

The heat exchanger 20 includes a heat exchanger body 22 having a series of adjacent first flow channels 26 and second flow channels 27. The first flow channels 26 are isolated from the second flow channels 27, with the first flow channels 26 defining a primary fluid circulation path 30 having an entry side 30a and an exit side 30b. First, second, and third ports 31, 32, 33 are provided on the heat exchanger body 22 and in fluid communication with the primary fluid circulation path 26. The first port 31 is located on the entry side 30a of the primary fluid circulation path 30 and is adapted to be an intake for fluid to be heated during normal usage, which in this exemplary embodiment, is drawn from the bottom of the hot water storage tank 38. The second and third ports 32, 33 are located at the exit side 30b of the primary fluid circulation path 30. The second port 32 is adapted to be an exit for heated fluid from the primary fluid circulation path 30 from the heat exchanger body 22 after it has been heated via heat transfer by fluid from the secondary fluid circulation path 36. The third port 33 is adapted to receive make-up fluid, for example mains water, when hot water is drawn from the top of the hot water storage tank 38 via outlet 39 by a hot water consumer. Fourth and fifth ports 34, 35 are provided for circulation of the secondary fluid through the second flow channels 27.

The valve arrangement 50 is located in the heat exchanger body 22 and/or in the second and third ports 32, 33 and is configured to passively switch between first and second operational modes. The valve arrangement 50 includes a first valve 51 that closes the third port 33 in the first operational mode during normal usage. The valve arrangement 50, further includes a second valve 61 that is located at or in proximity to the second port 32 in the heat exchanger body 22, and in the first operational mode, the second valve is open such that fluid being heated in the heat exchanger body 22 is adapted to circulate through the primary fluid circulation path 30 in a positive flow direction D1 from the first port 31 to the second port 32. A functional connection 70 is provided between the second valve 61 and the first valve 51 that extends through a portion of the heat exchanger body 22 such that movement of the first valve 51 to the closed position moves the second valve 61 to the open position, and movement of the first valve 51 to an open position moves the second valve 61 to a closed position.

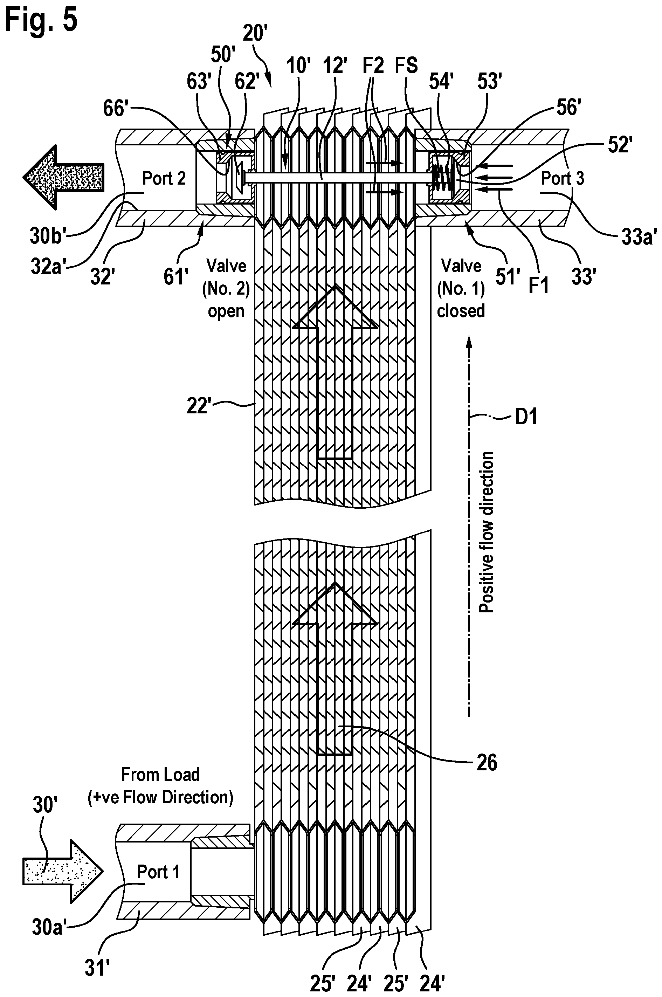

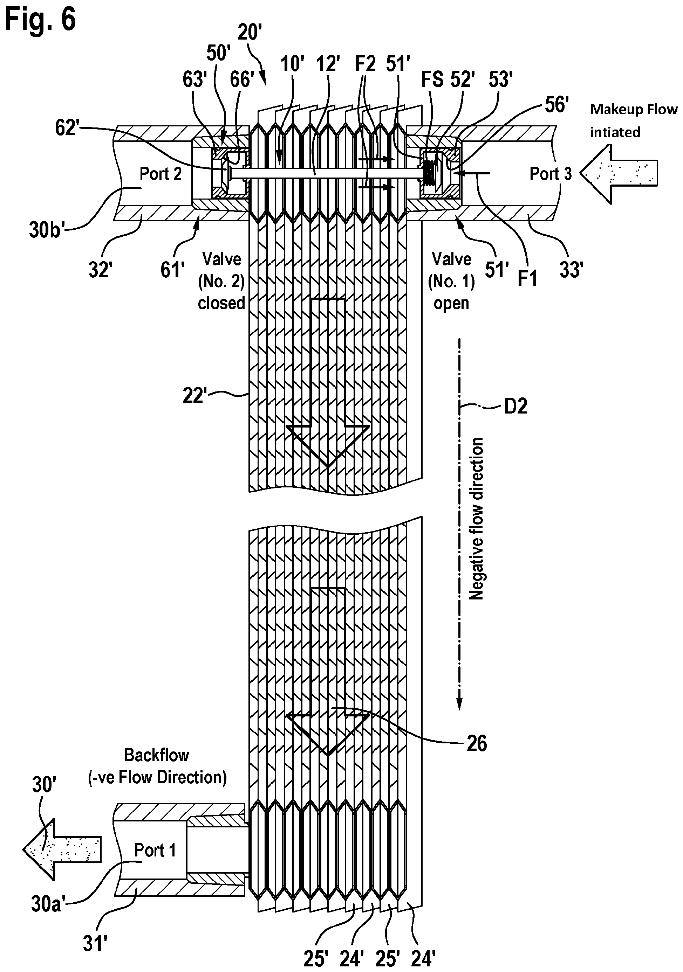

In the second operational mode, upon a force F1 (see for example, Figs. 5 and 6) of the make-up fluid acting on the first valve 51 from the third port 33 overcoming a closing force F_{S} of a resilient element (shown for example as 54' in Figs. 5 and 6 but not specifically in connection with the embodiment in Figs. 3 and 4) and any pressure force F2 (see Figs. 5 and 6) of the fluid in the primary fluid circulation path 30, such as when hot water is drawn from the hot water storage tank 38 via the outlet 39, the first valve 51 is movable to the open position while simultaneously moving the second valve 61 to the closed position such that the make-up fluid is adapted to circulate through the first flow channels 26 of the primary fluid circulation path 30 in a negative flow direction D2 from the third port 33 to the first port 31, as shown in Fig. 4. This backflushes the first flow channels 26 of the primary fluid circulation path 30 to remove fouling as well as re-dissolve certain mineral deposits with the reverse direction cold water flow from the pressurized fluid source for the make-up fluid. Upon the closing force F_{S} + pressure force F2 of the fluid in the primary fluid circulation path 30 exceeding the force F1 of the make-up fluid, such as when the hot water being drawn from the tank 38 stops, the first valve 51 again closes while simultaneously opening the second valve 61 via the functional connection 70.

Accordingly, the integral flow valve arrangement 50 is automatically actuated when a positive pressure differential is applied across the first valve 51, due to the consumption of the fluid in the secondary circuit or an increase in the pressure in the makeup supply liquid.

In one preferred arrangement, the first port 31 is preferably located below the second port 32 and the third port 33 in the usage position, particularly for convection water heater applications so that no separate pump is required to cause a fluid flow in the primary fluid circulation path 30 in the positive flow direction D1. However, this is not required for all applications.

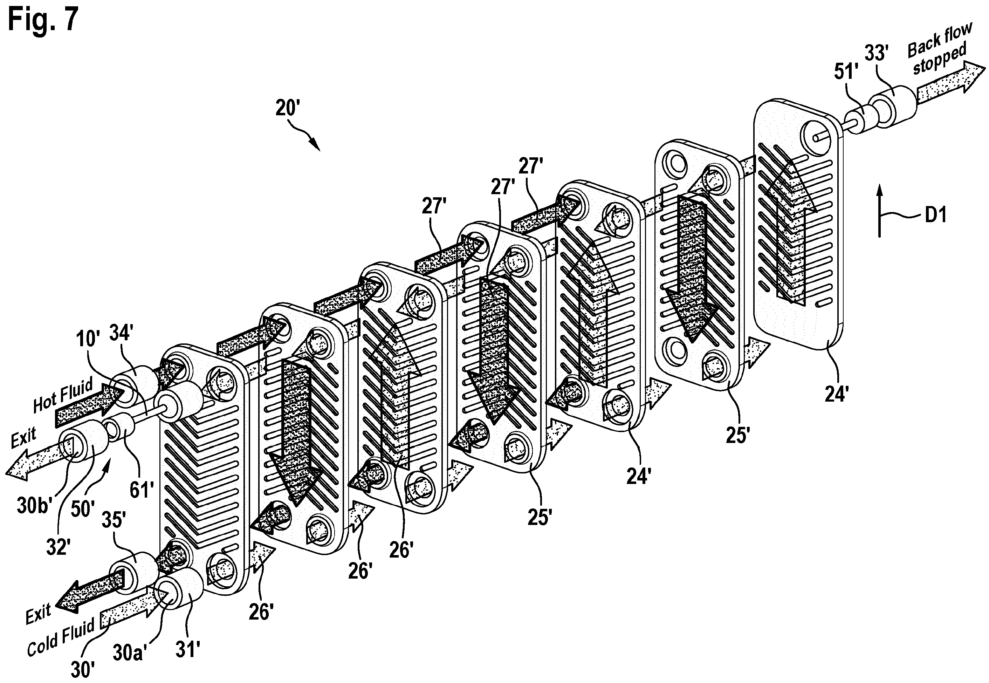

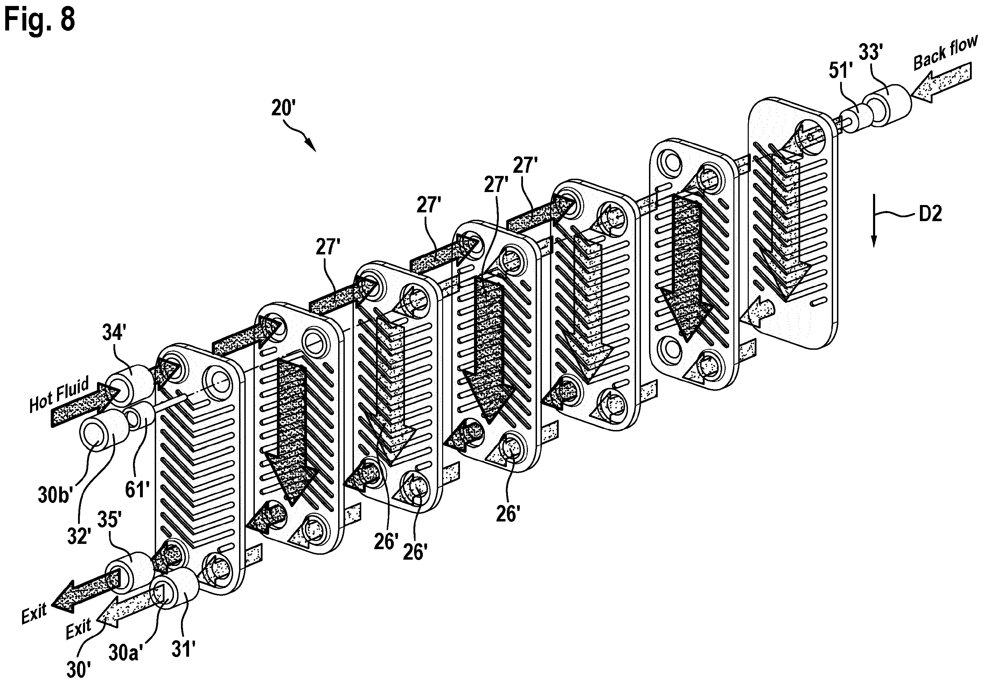

Referring now to Figures 5 - 8, a particularly preferred arrangement of the heat exchanger 20' is shown. The heat exchanger 20' is a similar to the heat exchanger 20 and operates in the same manner. Here, the heat exchanger body 22' is formed of alternating first and second plates 24', 25', shown most clearly in Figs. 7 and 8, that define the series of adjacent first flow channels 26' and second flow channels 27'. The first flow channels 26' define a primary fluid circulation path 30' having an entry side 30a' and an exit side 30b'. First, second, and third ports 31', 32', 33' are provided on the heat exchanger body 22' and in fluid communication with the primary fluid circulation path 26'. The first port 31' is located on the entry side 30a' of the primary fluid circulation path 30' and is adapted to be an intake for fluid to be heated during normal usage. The second and third ports 32', 33' are located at the exit side 30b' of the primary fluid circulation path 30'. The second port 32' is adapted to be an exit for heated fluid from the primary fluid circulation path 30' from the heat exchanger body 22' after it has been heated via heat transfer by fluid from the secondary fluid circulation path 36'. The third port 33' is adapted to receive make-up fluid, for example mains water if the heat exchanger is used as part of a water heating arrangement, although other applications are possible. Fourth and fifth ports 34', 35' are provided for circulation of the secondary fluid through the second flow channels 27', shown in Figs. 7 and 8.

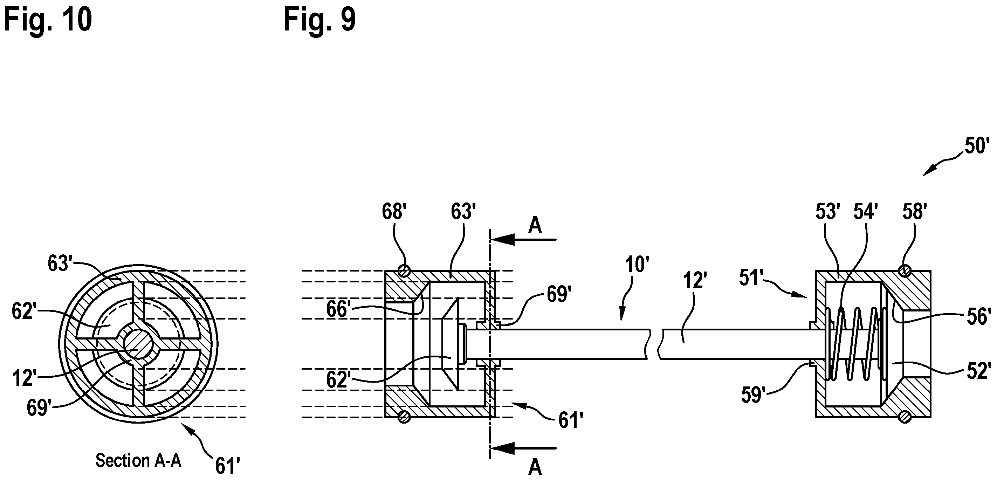

A valve arrangement 50' is located in at least one of the heat exchanger body 22' or the second and third ports 32', 33' that is configured to passively switch between first and second operational modes. The valve arrangement 50' here includes the first valve 51', preferably formed with a first valve body 52' that is biased by a resilient element 54' to a closed position against a first valve seat 56', which is located at or in proximity to the third port 33' in the heat exchanger body 22', in order to close the third port 33' in the first operational mode during normal usage. The valve arrangement 50' further includes a second valve 61', preferably having a second valve body 62' that acts against a second valve seat 66', which is located at or in proximity to the second port 32' in the heat exchanger body 22'. In the first operational mode, the second valve body 62' is in an open position spaced apart from the second valve seat 66' such that fluid being heated in the heat exchanger body 22' is adapted to circulate through the primary fluid circulation path 30' in a positive flow direction D1 from the first port 31' to the second port 32'. The functional connection 70', preferably in the form of a mechanical link 72', a magnetic coupling, or a hydraulic or pneumatic connection is provided between the second valve body 62' and the first valve body 52' and extends through a portion of the heat exchanger body 22' such that movement of the first valve body 52' to the closed position moves the second valve body 62' to the open position, and movement of the first valve body 52' to an open position moves the second valve body 62' to a closed position. Details of one exemplary embodiment of the valve arrangement 50' are shown in Figs. 9 and 10.

In the second operational mode, shown in Fig. 6, upon a force F1 of the make-up fluid acting on the first valve body 52' from the third port 33' overcoming a closing force F_{S} of the resilient element 54', which is shown here in the form of a coil spring, and any pressure force F2 of the fluid in the primary fluid circulation path 30', the first valve body 52' is movable to the open position while simultaneously moving the second valve body 62' to the closed position against the second valve seat 66' such that the make-up fluid is adapted to circulate through the first flow channels 26' of the primary fluid circulation path 30' in a negative flow direction D2 from the third port 33' to the first port 31'. This backflushes the first flow channels 26'of the primary fluid circulation path 30' to remove fouling as well as re-dissolves certain mineral deposits with the reverse direction cold water flow from the mains.

Upon the resilient force F_{S} and any pressure force F2 in the primary fluid path overcoming the force F1 of the make-up fluid that acts on the first valve body 52 at the third port, the valve arrangement 50' is configured to return to the first operational mode, closing the first valve body 52' against the first valve seat 56' while at the same time opening the second valve 61'. This allows for totally passive operation of the valve arrangement 50' for backflushing based on a demand for heated fluid being drawn from a downstream position connected to a hot side of the primary fluid path 30' causing a pressure drop that allows the valve arrangement 50' to move to the second operational mode.

In one preferred arrangement, the resilient element is a spring 54', and preferably a metallic coil spring. However, this could also be a pneumatic or magnetic force based resilient element.

In one preferred arrangement, the functional connection 70' is a mechanical link or shaft. However, it could also be a magnetic coupling, a hydraulic or pneumatic connection, or any other suitable arrangement.

In a particularly preferred arrangement, the second and third ports 32', 33' are axially aligned, and the functional connection 70' is an axially extending link or shaft 72'. This allows for easier manufacturing with only minimal changes from existing heat exchanger assemblies, such as 10 described above, in order to incorporate the valve arrangement 50' for passive backflushing.

The first valve seat 52' can be integrally formed in the third port 33'. Alternatively, the first valve seat 52' can be located in a first valve housing 53', for example as shown in Figs. 9 and 10, that is inserted into the third port 33', and the resilient element 54' is preferably also located in this first valve housing 53'. In this case, preferably, a first seal 58' is located between the first valve housing 53' and an inner wall 33a' (indicated in Fig. 5) of the third port 33' or the heat exchanger body 22'. A spring support 57' for the spring is preferably then also formed in the first valve housing 53'. Additionally, support 59' for the link or shaft 72' can be formed as part of the housing 53'.

The second valve seat 62' can also be integrally formed in the second port 32'. Alternatively, the second valve seat 62' can be located in a second valve housing 63', for example as shown in Figs. 9 and 10, that is inserted into the second port 32'. In this case, preferably, a second seal 68' is located between the second valve housing 63' and an inner wall 32a' (indicated in Fig. 5) of the second port 32' or the heat exchanger body 22'. Additionally, support 99' for the link or shaft 72' can be formed as part of the housing 63'.

In one embodiment, one of the first or second valve seats 56', 66' is integrally formed in a respective one of the third or second ports 33', 32', and the other of the first or second valve seats 56', 66' is formed as a separate part, such as the first or second valve housing 53', 63', that is inserted into the respective other one of the third or second ports 33' ,32'.

In one embodiment, both the first and second valve seats 56', 66' are inserted respectively into the third and second ports 33', 32', preferably with the first and second valve housings 53' 63'.

In one embodiment, a resilient element support 57' is located in the heat exchanger body 22', and the resilient element 54' is arranged between the resilient element support 57'and the first valve body 52'. Here, the resilient element support 57' can be formed in or part of the first valve housing 53'. Alternatively, it can be formed separately in the heat exchanger body 22'.

While the heat exchanger body 22' in this embodiment includes a series of metal plates 24, 25, assembled to form the series of the adjacent first flow channels 26' and the second flow channels 27', the heat exchanger body 22' could be formed in other manners, for example, as a series of parallel tubes, or a tube-in-tube heat exchanger arrangement.

In another aspect, a method of passively backflushing a heat exchanger 20, 20' is provided that includes the steps of:
Providing a heat exchanger 20, 20', such as described above;
Connecting the third port 33, 33' to a mains water supply;
Connecting the first port 31, 31' to a bottom connection of a hot water storage vessel 38;
Connecting the second port 32 to a top connection of the hot water storage tan 38k;
In the first operational mode, holding the second valve 61, 61' in the open position (while the first valve 51, 51' is closed), preferably with the second valve body 62' spaced apart from the second valve seat 66', providing a positive flow direction D1 for water from the first port 31, 31' to the second port 32, 32' through the primary fluid path 30, 30' of the heat exchanger body 22, 22'by convection as the water entering the first port 31, 31'is heated; and
In the second operational mode, upon a pressure force F1 of the water from the mains water supply at the third port 33, 33' overcoming a closing force of the resilient element F_{S} and any pressure force F2 of the water in the primary fluid path 26, 26', opening the first valve 51, 51', preferably by moving the first valve body 52' to the open position while simultaneously closing the second valve 61, 61', preferably by moving the second valve body 62' to the closed position against the second valve seat 66' such that the first valve 51, 51' is opened and providing a flow of the water from the mains water supply in in a negative flow direction D2 through the primary fluid circulation path 26, 26' from the third port 33, 33' to the first port 31, 31', backflushing the heat exchanger 20, 20'.

The method may optionally further include integrally forming at least one of the first or second valve seats 56', 66' in the respective third or second ports 33', 32' or a portion of the heat exchanger body 22'.

The method may optionally further include providing the second and third ports 32, 33; 32', 33'axially aligned with one another.

The method may optionally further include forming the functional connection 70, 70' as a mechanical link 72'. Alternatively, the functional connection 70, 70' could be formed by the other types of connections noted above.

Preferably, the method includes providing the heat exchanger 20, 20' as a pre-assembled unit with the valve arrangement 50, 50' integrally formed therein.

According to the present disclosure compact design is achieved that does not require extra external piping or pluming to connect to an external valve assembly to a heat exchanger 20, 20'. The integral dual action backflushing valve arrangement 50, 50' can be configured for different heat exchanger sizes and capacities, or applications, (e.g., high temperatures or corrosive environments, etc.,) including cases where either size or the number of plates is increased or decreased for a particular application. Further, the configuration and installation of the dual action backflushing valve arrangement 50, 50' can be done at the time of heat exchanger manufacturing ensuring proper operation and fit. Factory installation also allows the valve arrangement 50, 50' to be integrated into the heat exchanger body 22, 22' at lower cost.

Further benefits of this arrangement are that the integral valve arrangement 50, 50' will operate in any orientation that may be required for proper placement of the heat exchanger 20, 20' for a particular application, and does not rely on weak gravitational forces to return to a "normal" operational mode.

Finally, by specify different retaining force levels and characteristics (e.g., spring force, length, displacement and "spring constant"), the rate and magnitude of the opening or closing of the valve arrangement 50, 50' can be specified by changing the hydraulic and retaining force characteristics, facilitating a desired operation.

It will be appreciated that the foregoing is presented by way of illustration only and not by way of any limitation. It is contemplated that various alternatives and modifications may be made to the described embodiments without departing from the scope of the invention as defined by the appended claims. Having thus described the present invention in detail, it is to be appreciated and will be apparent to those skilled in the art that many physical changes, only a few of which are exemplified in the detailed description of the invention, could be made without altering the inventive concepts and principles embodied therein. It is also to be appreciated that numerous embodiments incorporating only part of the preferred embodiment are possible which do not alter, with respect to those parts, the inventive concepts and principles embodied therein. The present embodiment and optional configurations are therefore to be considered in all respects as exemplary and/or illustrative and not restrictive, the scope of the invention being indicated by the appended claims rather than by the foregoing description.

## Claims

1. A heat exchanger (20; 20'), comprising:
a heat exchanger body (22; 22') having a series of adjacent first flow channels (26; 26') and second flow channels (27; 27'), the first flow channels (26; 26') being isolated from the second flow channels, the first flow channels (26; 26') defining a primary fluid circulation path (30; 30') having an entry side (30a; 30a') and an exit side (30b; 30b');
first (31; 31'), second (32; 32'), and third (33; 33') ports provided on the heat exchanger body (22; 22') and in fluid communication with the primary fluid circulation path (30; 30'), the first port (31; 31') being located on the entry side (30a; 30a') of the primary fluid circulation path (30; 30') and being adapted to be an intake for fluid to be heated during normal usage, and the second (32; 32') and third (33; 33') ports being located at the exit side (30b; 30b') of the primary fluid circulation path (30; 30'), the second port (32; 32') being adapted to be an exit for heated fluid from the primary fluid circulation path (30; 30') from the heat exchanger body (22; 22'), and the third port (33; 33') being adapted to receive make-up fluid; **characterised in that** the heat exchanger (20; 20') further comprises
a valve arrangement (50; 50') located in at least one of the heat exchanger body (22; 22') or the second (32; 32') and third (33; 33') ports that is configured to passively switch between first and second operational modes, the valve arrangement (50; 50') including:
a first valve body (52; 52') that is biased by a resilient element (54; 54') to a closed position against a first valve seat (56; 56'), which is located at or in proximity to the third port (33; 33') in the heat exchanger body (22; 22'), in order to close the third port (33; 33') in the first operational mode during normal usage;
a second valve body (62; 62') that acts against a second valve seat (66; 66'), which is located at or in proximity to the second port (32; 32') in the heat exchanger body (22; 22'), and in the first operational mode, the second valve body (62; 62') is in an open position spaced apart from the second valve seat (66; 66') such that fluid being heated in the heat exchanger body (22; 22') is adapted to circulate through the primary fluid circulation path (30; 30') in a positive flow direction from the first port (31; 31') to the second port (32; 32');
a functional connection (70; 70') between the second valve body (62; 62') and the first valve body (52; 52') that extends through a portion of the heat exchanger body (22; 22') such that movement of the first valve body (52; 52') to the closed position moves the second valve body (62; 62') to the open position, and movement of the first valve body (52; 52') to an open position moves the second valve body (62; 62') to a closed position; and
in the second operational mode, upon a force of the make-up fluid acting on the first valve body (52; 52') from the third port (33; 33') overcoming a closing force of the resilient element (54; 54') and any pressure force of the fluid in the primary fluid circulation path (30; 30'), the first valve body (52; 52') is movable to the open position while simultaneously moving the second valve body (62; 62') to the closed position against the second valve seat such that the make-up fluid is adapted to circulate through the first flow channels (26; 26') of the primary fluid circulation path (30; 30') in a negative flow direction from the third port (33; 33') to the first port (31; 31').

2. The heat exchanger of claim 1, wherein upon the resilient force and any pressure force in the primary fluid path (30; 30') overcoming the force of the make-up fluid at the third port (33; 33'), the valve arrangement (50; 50') is configured to return to the first operational mode.

3. The heat exchanger of claim 1, wherein the resilient element (54; 54') is a spring and/or the functional connection (70; 70') is a mechanical link (72'), a magnetic coupling, or a hydraulic or pneumatic connection.

4. The heat exchanger of claim 1, wherein the second (32; 32') and third (33; 33') ports are axially aligned, and the functional connection (70; 70') is an axially extending shaft (72').

5. The heat exchanger of claim 1, wherein the first valve seat (56; 56') is integrally formed in the third port (33; 33') and/or the second valve seat (66; 66') is integrally formed in the second port (32; 32').

6. The heat exchanger of claim 1, wherein one of the first (56; 56') or second (66; 66') valve seats is integrally formed in a respective one of the third (33; 33') or second (32; 32') ports, and the other of the first (56; 56') or second (66; 66') valve seats is formed as a separate part that is inserted into the respective other one of the third (33; 33') or second (32; 32') ports or wherein the first (56; 56') and second (66; 66') valve seats are inserted respectively into the third (33; 33') and second (32; 32') ports.

7. The heat exchanger of claim 1, wherein the first valve seat (56; 56') is located in a first valve housing (53; 53') that is inserted into the third port (33; 33'), and the resilient element (54; 54') is located in at least one of the first valve housing (53; 53') or the second valve housing (63; 63').

8. The heat exchanger of claim 7, further comprising a first seal (58') between the first valve housing (53') and an inner wall (33a') of the third port (33') or the heat exchanger body (22').

9. The heat exchanger of claim 1, wherein the second valve seat (66') is located in a second valve housing (63') that is inserted into the second port (32').

10. The heat exchanger of claim 9, further comprising a second seal (68') between an inner wall (32a') of the second port (32') or the heat exchanger body (22').

11. The heat exchanger of claim 1, further comprising: a resilient element support (57') located in the heat exchanger body (22'), and the resilient element (54') is arranged between the resilient element support (57') and the first valve body (52'); and/or a circulation pump (37) in the primary fluid circulation path (36).

12. The heat exchanger of claim 1, wherein the heat exchanger body (22') includes a series of metal plates (24, 25) assembled to form the series of the adjacent first flow channels (26') and the second flow channels (27'),
and/or wherein the first port (31; 31') is located below the second port (32; 32') and the third port (33; 33') in a usage position.

13. A method of passively backflushing a heat exchanger (20; 20'), the method comprising:
providing a heat exchanger (20; 20') having a heat exchanger body (22; 22') with a series of adjacent first flow channels (26; 26') and second flow channels (27; 27'), the first flow channels (26; 26') being isolated from the second flow channels (27; 27'), the first flow channels (26; 26') defining a primary fluid circulation path (30; 30') having an entry side (30a; 30a') and an exit side (30b; 30b'); first (31; 31'), second (32; 32'), and third (33; 33') ports provided on the heat exchanger body (22; 22') and in fluid communication with the primary fluid circulation path (30; 30'), the first port (31; 31') being located on the entry side (30a; 30a') of the primary fluid circulation path (30; 30'), and the second (32; 32') and third (33; 33') ports being located at the exit side of the primary fluid circulation path (30; 30'), with the first port (31; 31') being located upstream of the second port (32; 32') and the third port (33; 33') in a usage position; a valve arrangement located (50; 50') in at least one of the heat exchanger body (22; 22') or the second (32; 32') and third (33; 33') ports that is configured to passively switch between first and second operational modes, the valve arrangement (50; 50') including a first valve (51; 51') with a first valve body (52; 52') that is biased by a resilient element (54; 54') to a closed position against a first valve seat (56; 56'), which is located at or in proximity to the third port (33; 33') in the heat exchanger body (22; 22'), in order to close the third port (33; 33') in the first operational mode during normal usage, a second valve (61; 61') having a second valve body (62; 62') that acts against a second valve seat (66; 66'), which is located at or in proximity to the second port (32; 32') in the heat exchanger body (22; 22'), and in the first operational mode, the second valve body (62; 62') is in an open position spaced apart from the second valve seat (66; 66'), and a functional connection (70; 70') between the second valve body (62; 62') and the first valve body (52; 52') that extends through a portion of the heat exchanger body (22; 22') such that movement of the first valve body (52; 52') to the closed position moves the second valve body (62; 62') to the open position, and movement of the first valve body (52; 52') to an open position moves the second valve body (62; 62') to a closed position;
connecting the third port (33; 33') to a make-up fluid supply;
connecting the first port (31; 31') to a bottom connection of a hot fluid storage tank (38);
connecting the second port (32; 32') to a top connection of the hot fluid storage tank(38);
in the first operational mode, holding the second valve body (62; 62') in the open position spaced apart from the second valve seat (66; 66') providing a positive flow direction for fluid from the first port (31; 31') to the second port (32; 32') through the primary fluid path (30; 30') of the heat exchanger body (22; 22') as the fluid entering the first port (31; 31') is heated; and
in the second operational mode, upon a pressure of make-up fluid at the third port (33; 33') overcoming a closing force of the resilient element (54; 54') and any pressure force of the fluid in the primary fluid path (30; 30'), moving the first valve body (52; 52') to the open position while simultaneously moving the second valve body (62; 62') to the closed position against the second valve seat (66; 66') such that the first valve (51; 51') is opened and providing a flow of make-up fluid in a negative flow direction through the primary fluid circulation path (30; 30') from the third port (33; 33') to the first port (31; 31'), backflushing the heat exchanger (20; 20').

14. The method of claim 13, further comprising integrally forming at least one of the first (56; 56') or second (66; 66') valve seats in the respective third (33; 33') or second (32; 32') ports or a portion of the heat exchanger body (20; 20').

15. The method of claim 13, further comprising providing the second (32; 32') and third (33; 33') ports axially aligned with one another; and/or forming the functional connection (70; 70') as a mechanical link (72'); and/or providing the heat exchanger assembly as a pre-assembled unit.

## Patentansprüche

1. Wärmetauscher (20; 20'), umfassend:
einen Wärmetauscherkörper (22; 22'), der eine Reihe benachbarter erster Strömungskanäle (26; 26') und zweiter Strömungskanäle (27; 27') aufweist, wobei die ersten Strömungskanäle (26; 26') von den zweiten Strömungskanälen isoliert sind, wobei die ersten Strömungskanäle (26; 26') einen primären Fluidzirkulationsweg (30; 30') definieren, der eine Einlassseite (30a; 30a') und eine Auslassseite (30b; 30b') aufweist;
eine erste (31; 31'), eine zweite (32; 32') und eine dritte (33; 33') Öffnung, die am Wärmetauscherkörper (22; 22') vorgesehen sind und in Fluidverbindung mit dem primären Fluidzirkulationsweg (30; 30') stehen, wobei die erste Öffnung (31; 31') auf der Einlassseite (30a; 30a') des primären Fluidzirkulationswegs (30; 30') angeordnet ist und dafür eingerichtet ist, während der normalen Verwendung als Aufnahme für zu erwärmendes Fluid zu dienen, und wobei die zweite (32; 32') und die dritte (33; 33') Öffnung auf der Auslassseite (30b; 30b') des primären Fluidzirkulationswegs (30; 30') angeordnet sind, wobei die zweite Öffnung (32; 32') dafür eingerichtet ist, als Auslass für erwärmtes Fluid aus dem primären Fluidzirkulationsweg (30; 30') aus dem Wärmetauscherkörper (22; 22') zu dienen, und wobei die dritte Öffnung (33; 33') dafür eingerichtet ist, Ergänzungsfluid aufzunehmen; **dadurch gekennzeichnet, dass** der Wärmetauscher (20; 20') ferner Folgendes umfasst:
eine Ventilanordnung (50; 50'), die in mindestens einem aus dem Wärmetauscherkörper (22; 22') oder der zweiten (32; 32') und der dritten (33; 33') Öffnung angeordnet ist und dafür ausgelegt ist, passiv zwischen einem ersten und einem zweiten Betriebsmodus umzuschalten, wobei die Ventilanordnung (50; 50') Folgendes beinhaltet:
einen ersten Ventilkörper (52; 52'), der durch ein elastisches Element (54; 54') in eine geschlossene Position gegen einen ersten Ventilsitz (56; 56') vorgespannt ist, der am oder in der Nähe der dritten Öffnung (33; 33') im Wärmetauscherkörper (22; 22') angeordnet ist, um die dritte Öffnung (33; 33') im ersten Betriebsmodus während der normalen Verwendung zu schließen;
einen zweiten Ventilkörper (62; 62'), der gegen einen zweiten Ventilsitz (66; 66') wirkt, der an oder in der Nähe der zweiten Öffnung (32; 32') im Wärmetauscherkörper (22; 22') angeordnet ist, wobei sich der zweite Ventilkörper (62; 62') im ersten Betriebsmodus in einer offenen Position befindet, die vom zweiten Ventilsitz (66; 66') beabstandet ist, sodass das im Wärmetauscherkörper (22; 22') erwärmte Fluid dafür eingerichtet ist, durch den primären Fluidzirkulationsweg (30; 30') in einer positiven Strömungsrichtung von der ersten Öffnung (31; 31') zur zweiten Öffnung (32; 32') zu zirkulieren;
eine funktionelle Verbindung (70; 70') zwischen dem zweiten Ventilkörper (62; 62') und dem ersten Ventilkörper (52; 52'), die sich durch einen Abschnitt des Wärmetauscherkörpers (22; 22') erstreckt, sodass eine Bewegung des ersten Ventilkörpers (52; 52') in die geschlossene Position den zweiten Ventilkörper (62; 62') in die offene Position bewegt und eine Bewegung des ersten Ventilkörpers (52; 52') in eine offene Position den zweiten Ventilkörper (62; 62') in eine geschlossene Position bewegt; und
wobei im zweiten Betriebsmodus, sobald eine auf den ersten Ventilkörper (52; 52') wirkende Kraft des Ergänzungsfluids aus der dritten Öffnung (33; 33') eine Schließkraft des elastischen Elements (54; 54') und jegliche Druckkraft des Fluids im primären Fluidzirkulationsweg (30; 30') überwindet, der erste Ventilkörper (52; 52') in die offene Position bewegbar ist, während gleichzeitig der zweite Ventilkörper (62; 62') gegen den zweiten Ventilsitz in die geschlossene Position bewegt wird, sodass das Ergänzungsfluid dafür eingerichtet ist, durch die ersten Strömungskanäle (26; 26') des primären Fluidzirkulationswegs (30; 30') in einer negativen Strömungsrichtung von der dritten Öffnung (33; 33') zur ersten Öffnung (31; 31') zu zirkulieren.

2. Wärmetauscher nach Anspruch 1, wobei, sobald die Federkraft und jegliche Druckkraft im primären Fluidzirkulationsweg (30; 30') die Kraft des Ergänzungsfluids an der dritten Öffnung (33; 33') überwinden, die Ventilanordnung (50; 50') dafür ausgelegt ist, in den ersten Betriebsmodus zurückzukehren.

3. Wärmetauscher nach Anspruch 1, wobei das elastische Element (54; 54') eine Feder ist und/oder die funktionelle Verbindung (70; 70') ein mechanisches Verbindungsglied (72'), eine magnetische Kupplung oder eine hydraulische oder pneumatische Verbindung ist.

4. Wärmetauscher nach Anspruch 1, wobei die zweite (32; 32') und die dritte (33; 33') Öffnung axial aufeinander ausgerichtet sind und die funktionelle Verbindung (70; 70') eine sich axial erstreckende Welle (72') ist.

5. Wärmetauscher nach Anspruch 1, wobei der erste Ventilsitz (56; 56') einstückig in der dritten Öffnung (33; 33') ausgebildet ist und/oder der zweite Ventilsitz (66; 66') einstückig in der zweiten Öffnung (32; 32') ausgebildet ist.

6. Wärmetauscher nach Anspruch 1, wobei einer von dem ersten (56; 56') oder dem zweiten (66; 66') Ventilsitz einstückig in einer jeweiligen von der dritten (33; 33') oder der zweiten (32; 32') Öffnung ausgebildet ist und der andere von dem ersten (56; 56') oder dem zweiten (66; 66') Ventilsitz als separater Teil ausgebildet ist, der in die jeweils andere von der dritten (33; 33') oder der zweiten (32; 32') Öffnung eingesetzt ist, oder wobei der erste (56; 56') und der zweite (66; 66') Ventilsitz jeweils in die dritte (33; 33') und die zweite (32; 32') Öffnung eingesetzt sind.

7. Wärmetauscher nach Anspruch 1, wobei der erste Ventilsitz (56; 56') in einem ersten Ventilgehäuse (53; 53') angeordnet ist, das in die dritte Öffnung (33; 33') eingesetzt ist, und das elastische Element (54; 54') in mindestens einem von dem ersten Ventilgehäuse (53; 53') oder dem zweiten Ventilgehäuse (63; 63') angeordnet ist.

8. Wärmetauscher nach Anspruch 7, ferner umfassend eine erste Dichtung (58') zwischen dem ersten Ventilgehäuse (53') und einer Innenwand (33a') der dritten Öffnung (33') oder dem Wärmetauscherkörper (22').

9. Wärmetauscher nach Anspruch 1, wobei der zweite Ventilsitz (66') in einem zweiten Ventilgehäuse (63') angeordnet ist, das in die zweite Öffnung (32') eingesetzt ist.

10. Wärmetauscher nach Anspruch 9, ferner umfassend eine zweite Dichtung (68') zwischen einer Innenwand (32a') der zweiten Öffnung (32') oder dem Wärmetauscherkörper (22').

11. Wärmetauscher nach Anspruch 1, ferner umfassend: eine im Wärmetauscherkörper (22') angeordnete Halterung für das elastische Element (57'), wobei sich das elastische Element (54') zwischen der Halterung für das elastische Element (57') und dem ersten Ventilkörper (52') befindet; und/oder eine Umwälzpumpe (37) im primären Fluidzirkulationsweg (36).

12. Wärmetauscher nach Anspruch 1, wobei der Wärmetauscherkörper (22') eine Reihe von Metallplatten (24, 25) beinhaltet, die so zusammengesetzt sind, dass sie die Reihe benachbarter erster Strömungskanäle (26') und zweiter Strömungskanäle (27') bilden, und/oder wobei die erste Öffnung (31; 31') in einer Verwendungsposition unterhalb der zweiten Öffnung (32; 32') und der dritten Öffnung (33; 33') angeordnet ist.

13. Verfahren zum passiven Rückspülen eines Wärmetauschers (20; 20'), wobei das Verfahren Folgendes umfasst:
Bereitstellen eines Wärmetauschers (20; 20'), der Folgendes aufweist: einen Wärmetauscherkörper (22; 22') mit einer Reihe benachbarter erster Strömungskanäle (26; 26') und zweiter Strömungskanäle (27; 27'), wobei die ersten Strömungskanäle (26; 26') von den zweiten Strömungskanälen (27; 27') isoliert sind, wobei die ersten Strömungskanäle (26; 26') einen primären Fluidzirkulationsweg (30; 30') definieren, der eine Einlassseite (30a; 30a') und eine Auslassseite (30b; 30b') aufweist; eine erste (31; 31'), eine zweite (32; 32') und eine dritte (33; 33') Öffnung, die am Wärmetauscherkörper (22; 22') vorgesehen sind und in Fluidverbindung mit dem primären Fluidzirkulationsweg (30; 30') stehen, wobei die erste Öffnung (31; 31') auf der Einlassseite (30a; 30a') des primären Fluidzirkulationswegs (30; 30') angeordnet ist und die zweite (32; 32') und die dritte (33; 33') Öffnung auf der Auslassseite des primären Fluidzirkulationswegs (30; 30') angeordnet sind, wobei die erste Öffnung (31; 31') in einer Verwendungsposition stromaufwärts der zweiten Öffnung (32; 32') und der dritten Öffnung (33; 33') angeordnet ist; eine Ventilanordnung (50; 50'), die in mindestens einem von dem Wärmetauscherkörper (22; 22') oder der zweiten (32; 32') und der dritten (33; 33') Öffnung angeordnet ist und dafür ausgelegt ist, passiv zwischen einem ersten und einem zweiten Betriebsmodus umzuschalten, wobei die Ventilanordnung (50; 50') Folgendes beinhaltet: ein erstes Ventil (51; 51') mit einem ersten Ventilkörper (52; 52'), der durch ein elastisches Element (54; 54') in eine geschlossene Position gegen einen ersten Ventilsitz vorgespannt ist (56; 56'), der an oder in der Nähe der dritten Öffnung (33; 33') im Wärmetauscherkörper (22; 22') angeordnet ist, um die dritte Öffnung (33; 33') im ersten Betriebsmodus während der normalen Verwendung zu schließen, ein zweites Ventil (61; 61'), das einen zweiten Ventilkörper (62; 62') aufweist, der gegen einen zweiten Ventilsitz (66; 66') wirkt, der am oder in der Nähe der zweiten Öffnung (32; 32') im Wärmetauscherkörper (22; 22') angeordnet ist, wobei sich der zweite Ventilkörper (62; 62') im ersten Betriebsmodus in einer offenen Position befindet, die vom zweiten Ventilsitz (66; 66') beabstandet ist, und eine funktionelle Verbindung (70; 70') zwischen dem zweiten Ventilkörper (62; 62') und dem ersten Ventilkörper (52; 52'), die sich durch einen Abschnitt des Wärmetauscherkörpers (22; 22') erstreckt, sodass eine Bewegung des ersten Ventilkörpers (52; 52') in die geschlossene Position den zweiten Ventilkörper (62; 62') in die offene Position bewegt und eine Bewegung des ersten Ventilkörpers (52; 52') in eine offene Position den zweiten Ventilkörper (62; 62') in eine geschlossene Position bewegt;
Verbinden der dritten Öffnung (33; 33') mit einer Ergänzungsfluidversorgung;
Verbinden der ersten Öffnung (31; 31') mit einem unteren Anschluss eines Heißfluid-Speicherbehälters (38);
Verbinden der zweiten Öffnung (32; 32') mit einem oberen Anschluss des Heißfluid-Speicherbehälters (38);
im ersten Betriebsmodus Halten des zweiten Ventilkörpers (62; 62') in der von dem zweiten Ventilsitz beabstandeten offenen Position (66; 66'), wodurch eine positive Strömungsrichtung für das Fluid von der ersten Öffnung (31; 31') zur zweiten Öffnung (32; 32') durch den primären Fluidweg (30; 30') des Wärmetauscherkörpers (22; 22') bereitgestellt wird, während das in die erste Öffnung (31; 31') eintretende Fluid erwärmt wird; und
im zweiten Betriebsmodus, sobald ein Druck des Ergänzungsfluids an der dritten Öffnung (33; 33') eine Schließkraft des elastischen Elements (54; 54') und jegliche Druckkraft des Fluids im primären Fluidweg (30; 30') überwindet, Bewegen des ersten Ventilkörpers (52; 52') in die offene Position, während gleichzeitig der zweite Ventilkörper (62; 62') gegen den zweiten Ventilsitz (66; 66') in die geschlossene Position bewegt wird, sodass das erste Ventil (51; 51') geöffnet wird und ein Ergänzungsfluidstrom in einer negativen Strömungsrichtung durch den primären Fluidzirkulationsweg (30; 30') von der dritten Öffnung (33; 33') zur ersten Öffnung (31; 31') bereitgestellt wird, wodurch der Wärmetauscher (20; 20') rückgespült wird.

14. Verfahren nach Anspruch 13, ferner umfassend das einstückige Ausbilden von mindestens einem aus dem ersten (56; 56') oder dem zweiten (66; 66') Ventilsitz in der jeweiligen dritten (33; 33') oder zweiten (32; 32') Öffnung oder einem Abschnitt des Wärmetauscherkörpers (20; 20').

15. Verfahren nach Anspruch 13, ferner umfassend das Bereitstellen der zweiten (32; 32') und der dritten (33; 33') Öffnung auf axial aufeinander ausgerichtete Weise; und/oder Ausbilden der funktionellen Verbindung (70; 70') als mechanisches Verbindungsglied (72'); und/oder Bereitstellen der Wärmetauscheranordnung als vormontierte Einheit.

## Revendications

1. Échangeur de chaleur (20 ; 20'), comprenant :
un corps d'échangeur de chaleur (22 ; 22') comportant une série de premiers canaux d'écoulement (26 ; 26') et de deuxièmes canaux d'écoulement (27 ; 27') adjacents, les premiers canaux d'écoulement (26 ; 26') étant isolés des deuxièmes canaux d'écoulement, les premiers canaux d'écoulement (26 ; 26') définissant un chemin de circulation de fluide primaire (30 ; 30') comportant un côté entrée (30a ; 30a') et un côté sortie (30b ; 30b') ;
des premier (31 ; 31'), deuxième (32 ; 32') et troisième (33 ; 33') orifices ménagés sur le corps d'échangeur de chaleur (22 ; 22') et en communication fluidique avec le chemin de circulation de fluide primaire (30 ; 30'), le premier orifice (31 ; 31') étant situé du côté entrée (30a ; 30a') du chemin de circulation de fluide primaire (30 ; 30') et étant adapté pour servir d'admission de fluide à chauffer pendant un usage normal, et les deuxième (32 ; 32') et troisième (33 ; 33') orifices étant situés du côté sortie (30b ; 30b') du chemin de circulation de fluide primaire (30 ; 30'), le deuxième orifice (32 ; 32') étant adapté pour servir de sortie de fluide chauffé provenant du chemin de circulation de fluide primaire (30 ; 30') issu du corps d'échangeur de chaleur (22 ; 22'), et le troisième orifice (33 ; 33') étant adapté pour recevoir du fluide d'appoint ; **caractérisé en ce que** l'échangeur de chaleur (20 ; 20') comprend en outre
un agencement de soupape (50 ; 50') situé dans au moins l'un parmi le corps d'échangeur de chaleur (22 ; 22') ou les deuxième (32 ; 32') et troisième (33 ; 33') orifices qui est configuré pour basculer passivement entre un premier et un deuxième mode de fonctionnement, l'agencement de soupape (50 ; 50') comportant :
un premier corps de soupape (52 ; 52') qui est sollicité par un élément résilient (54 ; 54') vers une position fermée contre un premier siège de soupape (56 ; 56'), qui se situe au niveau ou à proximité du troisième orifice (33 ; 33') dans le corps d'échangeur de chaleur (22 ; 22'), afin de fermer le troisième orifice (33 ; 33') dans le premier mode de fonctionnement pendant un usage normal ;
un deuxième corps de soupape (62 ; 62') qui agit contre un deuxième siège de soupape (66 ; 66'), qui se situe au niveau ou à proximité du deuxième orifice (32 ; 32') dans le corps d'échangeur de chaleur (22 ; 22'), et dans le premier mode de fonctionnement, le deuxième corps de soupape (62 ; 62') se trouve dans une position ouverte, à l'écart du deuxième siège de soupape (66 ; 66') de telle sorte qu'un fluide chauffé dans le corps d'échangeur de chaleur (22 ; 22') est adapté pour circuler à travers le chemin de circulation de fluide primaire (30 ; 30') dans un sens d'écoulement positif allant du premier orifice (31 ; 31') au deuxième orifice (32 ; 32') ;
une liaison fonctionnelle (70 ; 70') entre le deuxième corps de soupape (62 ; 62') et le premier corps de soupape (52 ; 52') qui s'étend à travers une portion du corps d'échangeur de chaleur (22 ; 22') de telle sorte qu'un déplacement du premier corps de soupape (52 ; 52') vers la position fermée déplace le deuxième corps de soupape (62 ; 62') vers la position ouverte, et qu'un déplacement du premier corps de soupape (52 ; 52') vers une position ouverte déplace le deuxième corps de soupape (62 ; 62') vers une position fermée ; et
dans le deuxième mode de fonctionnement, lorsqu'une force du fluide d'appoint agissant sur le premier corps de soupape (52 ; 52') provenant du troisième orifice (33 ; 33') l'emporte sur une force de fermeture de l'élément résilient (54 ; 54') et toute force de pression du fluide dans le chemin de circulation de fluide primaire (30 ; 30'), le premier corps de soupape (52 ; 52') peut être déplacé vers la position ouverte tout en déplaçant simultanément le deuxième corps de soupape (62 ; 62') vers la position fermée contre le deuxième siège de soupape, de telle sorte que le fluide d'appoint est adapté pour circuler à travers les premiers canaux d'écoulement (26 ; 26') du chemin de circulation de fluide primaire (30 ; 30') dans un sens d'écoulement négatif allant du troisième orifice (33 ; 33') au premier orifice (31 ; 31').

2. Échangeur de chaleur selon la revendication 1, dans lequel, lorsque la force résiliente et toute force de pression dans le chemin de fluide primaire (30 ; 30') l'emportent sur la force du fluide d'appoint au niveau du troisième orifice (33 ; 33'), l'agencement de soupape (50 ; 50') est configuré pour revenir au premier mode de fonctionnement.

3. Échangeur de chaleur selon la revendication 1, dans lequel l'élément résilient (54 ; 54') est un ressort et/ou la liaison fonctionnelle (70 ; 70') est un lien mécanique (72'), un couplage magnétique ou une liaison hydraulique ou pneumatique.

4. Échangeur de chaleur selon la revendication 1, dans lequel les deuxième (32 ; 32') et troisième (33 ; 33') orifices sont alignés axialement, et la liaison fonctionnelle (70 ; 70') est un arbre s'étendant axialement (72').

5. Échangeur de chaleur selon la revendication 1, dans lequel le premier siège de soupape (56 ; 56') est formé d'un seul tenant dans le troisième orifice (33 ; 33') et/ou le deuxième siège de soupape (66 ; 66') est formé d'un seul tenant dans le deuxième orifice (32 ; 32').

6. Échangeur de chaleur selon la revendication 1, dans lequel l'un des premier (56 ; 56') ou deuxième (66 ; 66') sièges de soupape est formé d'un seul tenant dans l'un respectif des troisième (33 ; 33') ou deuxième (32 ; 32') orifices, et l'autre des premier (56 ; 56') ou deuxième (66 ; 66') sièges de soupape est formé comme une pièce distincte qui est insérée dans l'autre orifice respectif parmi le troisième (33 ; 33') ou le deuxième (32 ; 32') orifices, ou dans lequel le premier (56 ; 56') et le deuxième (66 ; 66') sièges de soupape sont respectivement insérés dans le troisième (33 ; 33') et le deuxième (32 ; 32') orifices.

7. Échangeur de chaleur selon la revendication 1, dans lequel le premier siège de soupape (56 ; 56') se situe dans un premier logement de soupape (53 ; 53') qui est inséré dans le troisième orifice (33 ; 33'), et l'élément résilient (54 ; 54') se situe dans au moins l'un parmi le premier logement de soupape (53 ; 53') ou le deuxième logement de soupape (63 ; 63').

8. Échangeur de chaleur selon la revendication 7, comprenant en outre un premier joint d'étanchéité (58') entre le premier logement de soupape (53') et une paroi interne (33a') du troisième orifice (33') ou du corps d'échangeur de chaleur (22').

9. Échangeur de chaleur selon la revendication 1, dans lequel le deuxième siège de soupape (66') se situe dans un deuxième logement de soupape (63') qui est inséré dans le deuxième orifice (32').

10. Échangeur de chaleur selon la revendication 9, comprenant en outre un deuxième joint d'étanchéité (68') entre une paroi interne (32a') du deuxième orifice (32') ou le corps d'échangeur de chaleur (22').

11. Échangeur de chaleur selon la revendication 1, comprenant en outre : un support d'élément résilient (57') situé dans le corps d'échangeur de chaleur (22'), et l'élément résilient (54') est agencé entre le support d'élément résilient (57') et le premier corps de soupape (52') ; et/ou une pompe de circulation (37) dans le chemin de circulation de fluide primaire (36).

12. Échangeur de chaleur selon la revendication 1, dans lequel le corps d'échangeur de chaleur (22') comporte une série de plaques métalliques (24, 25) assemblées pour former la série des premiers canaux d'écoulement (26') et deuxièmes canaux d'écoulement (27') adjacents, et/ou dans lequel le premier orifice (31 ; 31') se situe en dessous du deuxième orifice (32 ; 32') et du troisième orifice (33 ; 33') dans une position d'usage.

13. Procédé de lavage à contre-courant passif d'un échangeur de chaleur (20 ; 20'), le procédé comprenant :
la fourniture d'un échangeur de chaleur (20 ; 20') comportant un corps d'échangeur de chaleur (22 ; 22') muni d'une série de premiers canaux d'écoulement (26 ; 26') et de deuxièmes canaux d'écoulement (27 ; 27') adjacents, les premiers canaux d'écoulement (26 ; 26') étant isolés des deuxièmes canaux d'écoulement (27 ; 27'), les premiers canaux d'écoulement (26 ; 26') définissant un chemin de circulation de fluide primaire (30 ; 30') comportant un côté entrée (30a ; 30a') et un côté sortie (30b ; 30b') ; des premier (31 ; 31'), deuxième (32 ; 32') et troisième (33 ; 33') orifices ménagés sur le corps d'échangeur de chaleur (22 ; 22') et en communication fluidique avec le chemin de circulation de fluide primaire (30 ; 30'), le premier orifice (31 ; 31') étant situé du côté entrée (30a ; 30a') du chemin de circulation de fluide primaire (30 ; 30'), et les deuxième (32 ; 32') et troisième (33 ; 33') orifices étant situés du côté sortie du chemin de circulation de fluide primaire (30 ; 30'), le premier orifice (31 ; 31') étant situé en amont du deuxième orifice (32 ; 32') et du troisième orifice (33 ; 33') dans une position d'usage ; un agencement de soupape (50 ; 50') situé dans au moins l'un parmi le corps d'échangeur de chaleur (22 ; 22') ou les deuxième (32 ; 32') et troisième (33 ; 33') orifices, qui est configuré pour basculer passivement entre un premier et un deuxième mode de fonctionnement, l'agencement de soupape (50 ; 50') comportant une première soupape (51 ; 51') dotée d'un premier corps de soupape (52 ; 52') qui est sollicité par un élément résilient (54 ; 54') vers une position fermée contre un premier siège de soupape (56 ; 56'), qui se situe au niveau ou à proximité du troisième orifice (33 ; 33') dans le corps d'échangeur de chaleur (22 ; 22'), afin de fermer le troisième orifice (33 ; 33') dans le premier mode de fonctionnement pendant un usage normal, une deuxième soupape (61 ; 61') comportant un deuxième corps de soupape (62 ; 62') qui agit contre un deuxième siège de soupape (66 ; 66'), qui se situe au niveau ou à proximité du deuxième orifice (32 ; 32') dans le corps d'échangeur de chaleur (22 ; 22'), et, dans le premier mode de fonctionnement, le deuxième corps de soupape (62 ; 62') est dans une position ouverte, à l'écart du deuxième siège de soupape (66 ; 66'), et une liaison fonctionnelle (70 ; 70') entre le deuxième corps de soupape (62 ; 62') et le premier corps de soupape (52 ; 52') qui s'étend à travers une portion du corps d'échangeur de chaleur (22 ; 22') de telle sorte qu'un déplacement du premier corps de soupape (52 ; 52') vers la position fermée déplace le deuxième corps de soupape (62 ; 62') vers la position ouverte, et qu'un déplacement du premier corps de soupape (52 ; 52') vers une position ouverte déplace le deuxième corps de soupape (62 ; 62') vers une position fermée ;
la liaison du troisième orifice (33 ; 33') à une alimentation en fluide d'appoint ;
la liaison du premier orifice (31 ; 31') à une liaison basse d'un réservoir de stockage de fluide chaud (38) ;
la liaison du deuxième orifice (32 ; 32') à une liaison haute du réservoir de stockage de fluide chaud (38) ;
dans le premier mode de fonctionnement, la tenue du deuxième corps de soupape (62 ; 62') dans la position ouverte, à l'écart du deuxième siège de soupape (66 ; 66'), assurant un sens d'écoulement positif du fluide allant du premier orifice (31 ; 31') au deuxième orifice (32 ; 32') à travers le chemin de fluide primaire (30 ; 30') du corps d'échangeur de chaleur (22 ; 22') à mesure que le fluide entrant dans le premier orifice (31 ; 31') est chauffé ; et
dans le deuxième mode de fonctionnement, lorsqu'une pression de fluide d'appoint au niveau du troisième orifice (33 ; 33') l'emporte sur la force de fermeture de l'élément résilient (54 ; 54') et toute force de pression du fluide dans le chemin de fluide primaire (30 ; 30'), le déplacement du premier corps de soupape (52 ; 52') vers la position ouverte tout en déplaçant simultanément le deuxième corps de soupape (62 ; 62') vers la position fermée contre le deuxième siège de soupape (66 ; 66'), de sorte que la première soupape (51 ; 51') est ouverte et assurant un écoulement de fluide d'appoint dans un sens d'écoulement négatif à travers le chemin de circulation de fluide primaire (30 ; 30') allant du troisième orifice (33 ; 33') au premier orifice (31 ; 31'), lavant l'échangeur de chaleur (20 ; 20') à contre-courant.

14. Procédé selon la revendication 13, comprenant en outre la formation d'un seul tenant d'au moins l'un des premier (56 ; 56') ou deuxième (66 ; 66') sièges de soupape dans le troisième (33 ; 33^{'}) ou deuxième (32 ; 32') orifice respectif ou dans une portion du corps d'échangeur de chaleur (20 ; 20').

15. Procédé selon la revendication 13, comprenant en outre la fourniture des deuxième (32 ; 32') et troisième (33 ; 33') orifices alignés axialement les uns par rapport aux autres, et/ou la formation de la liaison fonctionnelle (70 ; 70') sous la forme d'un lien mécanique (72') ; et/ou la fourniture de l'ensemble échangeur de chaleur sous la forme d'une unité préassemblée.
